# EUROPEAN PATENT APPLICATION

(11) **EP 4 280 801 A1**
(43) Date of publication of application: **22.11.2023**
(21) Application number: 21918318.3
(22) Date of filing: 13.01.2021
(51) Int. Cl.: H04W 76/28

(54) **DIRECT COMMUNICATION CONTROL METHOD AND APPARATUS, DEVICES, AND STORAGE MEDIUM THEREOF**

(71) Applicant: Beijing Xiaomi Mobile Software Co., Ltd., Beijing 100085 (CN)
(72) Inventor: ZHAO, Qun, Beijing 100085 (CN)
(74) Representative: dompatent von Kreisler Selting Werner - Partnerschaft von Patent- und Rechtsanwälten mbB
(86) International application number: PCT/CN2021/071603
(87) International publication number: WO 2022/151103

(57) **Abstract**

The present invention provides a direct communication control method and apparatus, devices, and a storage medium thereof. The method comprises: sending direct control signaling, the direct control signaling comprising first indication information that controls the discontinuous reception (DRX) of a receiving device. Therefore, a sending device flexibly controls the DRX active time of the receiving device by means of direct control signaling, so as to acquire a balance between energy efficiency and system performance.

## Description

### TECHNICAL FIELD

The disclosure relates to the field of mobile communication technology, in particular to a sidelink control method, a sidelink control apparatus, a communication device and a storage medium thereof.

### BACKGROUND

The emergence of new generation Internet applications has placed higher demands on wireless communication technologies, which drives the evolution of wireless communication technologies to meet the needs of applications. Vehicle to Everything (V2X) communication can effectively enhance traffic safety, improve traffic efficiency and enrich people's travel experience. Using existing cellular communication technologies to support V2X communication can effectively utilize existing base station deployments, reduce device overhead, and facilitate the provision of Quality of Service (QoS)-guaranteed services to meet the needs of V2X services.

With the development of next-generation 5G mobile communication technology, 5G New Radio (NR) technology is used in 3GPP Release 16 (Rel-16) to support new V2X communication services and scenarios, such as fleet management, perception extension, advanced driving, and remote driving, etc.. In general, 5G V2X sidelink can provide higher communication rate, shorter communication delay, and more reliable communication quality. Based on the Rel-16V2X technology, Rel-17 Sidelink (SL) will be further optimized, considering more scenarios such as commercial or public security scenarios, and proposing new optimization goals such as reducing energy consumption of user equipment.

### SUMMARY

According to a first aspect of embodiments of the disclosure, a method for controlling a sidelink communication performed by a transmission device is provided. The method includes: sending a sidelink control signaling, in which the sidelink control signaling includes first indication information for controlling Discontinuous Reception (DRX) of a reception device.

Optionally, the sidelink control signaling is a physical-layer sidelink control information (SCI); or the sidelink control signaling is a Media Access Control Control Element (MAC CE).

Optionally, the first indication information includes information for indicating a time when the reception device enters an active state.

Optionally, the sidelink control signaling is a physical-layer SCI, and the physical SCI includes second indication information regarding time/frequency location(s) of reserved resource(s), in which the second indication information is to indicate the time when the reception device enters the active state.

Optionally, the second indication information is to indicate to enter the active state at a time T before the time/frequency location(s) of reserved resource(s).

Optionally, the method further includes determining information of the T by receiving a downlink signaling sent by a network device side or reading pre-configuration information.

Optionally, the physical-layer SCI further includes information for indicating the T.

Optionally, the physical-layer SCI includes an indication on whether the second indication information is used to indicate whether the reception device enters the active state.

Optionally, the first indication information further includes information for indicating an offset of the time when the reception device enters the active state.

Optionally, the information for indicating the offset is determined by receiving a downlink signaling sent by a network device side or reading pre-configuration information.

Optionally, the sidelink control signaling further includes an indication on whether the offset for the time when the reception device enters the active state is carried.

Optionally, the first indication information further includes information for indicating a length of time within which the reception device is in the active state.

Optionally, the information for indicating the length of time within which the reception device is in the active state includes information for indicating an offset by which the length of time within which the reception device is in the active state changes or information for indicating a value of the length of time within which the reception device is in the active state.

Optionally, the information for indicating the offset by which the length of time within which the reception device is in the active state changes is determined by: receiving a downlink signaling sent by the network device side or reading pre-configuration information.

Optionally, the information for indicating the value of the length of time within which the reception device is in the active state is determined by: receiving a downlink signaling sent by the network device side; or reading pre-configuration information.

Optionally, the sidelink control signaling further includes indication information on whether the information for indicating the length of time within which the reception device is in the active state is carried.

Optionally, the first indication information further includes: information for indicating a DRX cycle of the reception device.

Optionally, the information for indicating the DRX cycle of the reception device includes: information for indicating an offset by which the DRX cycle of the reception device changes; or, information for indicating a value of the DRX cycle of the reception device.

Optionally, the information for indicating the offset by which the DRX cycle of the reception device changes is determined by: receiving a downlink signaling sent by a network device side; or reading pre-configuration information.

Optionally, the information for indicating the value of the DRX cycle of the reception device is determined by: receiving a downlink signaling sent by a network device side; or reading pre-configuration information.

Optionally, the sidelink control signaling further includes information on whether the information for indicating the DRX cycle of the reception device is carried.

According to a second aspect of embodiments of the disclosure, a method for controlling a sidelink communication performed by a reception device is provided. The method includes: receiving a sidelink control signaling, in which the sidelink control signaling includes first indication information for controlling Discontinuous Reception (DRX) of the reception device; and performing a DRX operation based on the first indication information.

Optionally, performing the DRX operation based on the first indication information includes: entering an active state based on information of a time when the reception device enters the active state indicated by the first indication information.

Optionally, the sidelink control signaling is physical-layer sidelink control information (SCI), and the physical-layer SCI includes:

second indication information regarding time/frequency location(s) of reserved resource(s), in which the time when entering the active state is determined based on the time/frequency location(s) of reserved resource(s) indicated by the second indication information.

Optionally, the method includes: entering the active state at a time T before the time/frequency location(s) of reserved resource(s).

Optionally, information of the time T is obtained by at least one of: receiving a downlink control signaling sent by a network device side; reading pre-configuration information; or receiving indication information for indicating a value of the T carried by the physical-layer SCI.

Optionally, entering the active state based on the information of the time when the reception device enters the active state indicated by the first indication information includes: adjusting the time when the reception device enters the active state in subsequent DRX cycle(s), based on an offset of the time when the reception device enters the active state indicated by the first indication information.

Optionally, adjusting the time when the reception device enters the active state in the subsequent DRX cycle(s) includes: adjusting, by the reception device, the time when entering the active state in a next DRX cycle based on the first indication information; adjusting, by the reception device, the time when entering the active state in each DRX cycle within a subsequent preset time period based on the first indication information; or adjusting, by the reception device, the time when entering the active state in each subsequent DRX cycle based on the first indication information.

Optionally, adjusting the time when entering the active state in each DRX cycle within the subsequent preset time period includes determining the preset time period by receiving a downlink signaling sent by a network device side; or reading pre-configuration information.

Optionally, the method further includes: in response to receiving a plurality of pieces of information for indicating an offset of the time when the reception device enters the active state within a DRX cycle, adjusting the time when entering the active state in each subsequent DRX cycle based on a last received piece of information for indicating the offset.

Optionally, performing the DRX operation based on the first indication information includes: controlling an active duration in a DRX cycle based on information of a length of time within which the reception device is in the active state indicated by the first indication information.

Optionally, controlling the active duration in the DRX cycle based on the information of the length of time within which the reception device is in the active state indicated by the first indication information includes: extending or shortening the active duration in the DRX cycle based on information for indicating an offset by which the length of time within which the reception device is in the active state changes; or, determining the active duration in the DRX cycle based on information for indicating a value of the length of time within which the reception device is in the active state.

Optionally, controlling the active duration in the DRX cycle includes: controlling, by the reception device, the active duration in a current DRX cycle based on the first indication information; controlling, by the reception device, an active duration in a next DRX cycle based on the first indication information; controlling, by the reception device, an active duration in each DRX cycle within a subsequent preset time period based on the first indication information; or controlling, by the reception device, an active duration in each subsequent DRX cycle.

Optionally, controlling the active duration in each DRX cycle within the subsequent preset time period includes determining the preset time period by receiving a downlink signaling sent by a network device side; or reading pre-configuration information.

Optionally, performing the DRX operation based on the first indication information includes: determining a DRX cycle based on information of the DRX cycle of the reception device indicated by the first indication information.

Optionally, determining the DRX cycle based of the information on the DRX cycle of the reception device indicated by the first indication information includes: extending or shortening the DRX cycle based on information for indicating an offset by which the DRX cycle of the reception device changes; or, determining the DRX cycle based on information for indicating a value of the DRX cycle of the reception device. Optionally, determining the DRX cycle includes: determining, by the reception device, a current DRX cycle based on the first indication information; determining, by the reception device, a next DRX cycle based on the first indication information; determining, by the reception device, each DRX cycle within a subsequent preset time period based on the first indication information; or determining, by the reception device, all subsequent DRX cycles based on the first indication information.

Optionally, determining each DRX cycle in the subsequent preset time period includes: determining the preset time period by receiving a downlink signaling sent by a network device side; or reading pre-configuration information.

According to a third aspect of embodiments of the disclosure, an apparatus for controlling a sidelink communication applied to a transmission device is provided. The apparatus includes: a sending module, configured to send a sidelink control signaling, in which the sidelink control signaling includes first indication information for controlling Discontinuous Reception (DRX) of a reception device.

According to a fourth aspect of embodiments of the disclosure, an apparatus for controlling a sidelink communication applied to a reception device is provided. The apparatus includes: an indicating module, configured to receive a sidelink control signaling, in which the sidelink control signaling includes first indication information for controlling Discontinuous Reception (DRX) of the reception device; and an operating module, configured to perform DRX operation based on the first indication information.

According to a fifth aspect of embodiments of the disclosure, a communication device is provided. The communication device includes: a processor, a transceiver, a memory, and a computer program stored on the memory. When the computer program is executed by the processor, the method for controlling a sidelink communication according to the first aspect of embodiments is implemented.

According to a sixth aspect of embodiments of the disclosure, a communication device is provided. The communication device includes: a processor, a transceiver, a memory, and a computer program stored on the memory. When the computer program is executed by the processor, a method for controlling a sidelink communication according to the second aspect of embodiments is implemented.

According to a seventh aspect of embodiments of the disclosure, a processor-readable storage medium, having a computer program stored thereon, is provided. The computer program is configured to cause a processor to perform a method for controlling a sidelink communication according to the first aspect of embodiments or the method for controlling a sidelink communication according to the second aspect of embodiments.

The methods and the apparatus for controlling a sidelink communication and the communication devices according to the disclosure at least have the following technical effects.

The transmission device flexibly controls the active duration of the DRX of the reception device through the sidelink control signaling, thereby balancing the system communication performance and the energy saving requirement.

Additional aspects and advantages of embodiments of disclosure will be given in part in the following descriptions, become apparent in part from the following descriptions, or be learned from the practice of the embodiments of the disclosure.

### BRIEF DESCRIPTION OF THE DRAWINGS

The foregoing and/or additional aspects and advantages of the disclosure will become apparent and easily understood from the following description of the embodiments in combination with the accompanying drawings.
FIG. 1 is a flowchart illustrating a method for controlling a sidelink communication according to an embodiment of the disclosure.
FIG. 2 is a flowchart illustrating another method for controlling a sidelink communication according to an embodiment of the disclosure.
FIG. 3 is a schematic diagram illustrating an apparatus for controlling a sidelink communication according to an embodiment of the disclosure.
FIG. 4 is a schematic diagram illustrating another apparatus for controlling a sidelink communication according to an embodiment of the disclosure.
FIG. 5 is a block diagram illustrating a communication device according to an embodiment of the disclosure.

### DETAILED DESCRIPTION

Embodiments of the disclosure are described in detail below, examples of which are shown in the drawings, wherein the same or similar reference numerals designate the same or similar elements or elements having the same or similar functions throughout. The embodiments described below by reference to the accompanying drawings are examples and are intended to explain the disclosure and should not be construed as limiting the disclosure.

In the related art, in order to realize the discontinuous reception (DRX) energy saving of the R17 NR sidelink, the relevant User Equipment (UE) enters a sleep mode by turning off a receiver for energy saving. In the sleep state, the UE may not perform sidelink transmission reception and channel measurement operations to save energy.

For the DRX energy saving, the UE can periodically run the DRX on timer. When the DRX on timer is running, the UE is in an active state to carry out downlink control channel detection and reception. When the DRX on timer expires, the UE can switch to an inactive state and there is no need to carry out downlink reception operation. The start time, the period, and the running time of the DRX on timer can be preconfigured or configured by a base station, which do not belong to the content of this patent and will not be repeated.

However, the DRX operation of the reception UE will affect the resource selection of the transmission UE. If the sending resource selected by the transmission UE is within a DRX off time period of the reception UE, the reception UE will not be able to receive sidelink transmission. If the transmission UE cannot control and adjust the DRX of the reception UE, the transmission UE needs to ensure that the time/frequency resource(s) selected for its sidelink transmission is/are within an active duration of the reception UE.

However, additional resource selection restrictions will increase the possibility that the selected resource(s) will be subject to stronger interference, thereby degrading system performance. In addition, the transmission UE may not be able to ensure that the reserved time/frequency resource(s) is/are within the active duration of the reception UE.

Therefore, the disclosure provides a scheme in which the transmission UE can control and adjust the DRX of the reception UE.

The methods for controlling a sidelink communication, the apparatuses for controlling a sidelink communication, the communication devices, and the storage media according to embodiments of the disclosure will be described below with reference to the attached drawings. For ease of description, descriptions are focused on the transmission device and the reception device respectively. The transmission device and the reception device are a transmission UE and a reception UE for the sidelink data communication respectively. The transmission device and the reception device may be mobile terminals.

The description will be described from the side of the transmission device.

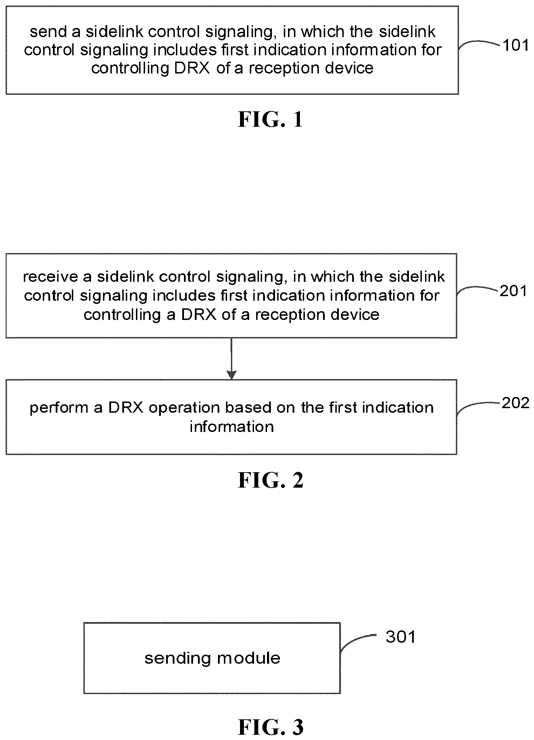

FIG. 1 is a flowchart illustrating a method for controlling a sidelink communication according to an embodiment of the disclosure. The method includes the following.

At step 101, a sidelink control signaling is sent. The sidelink control signaling includes first indication information for controlling a DRX of a reception device.

In this embodiment, the transmission device sends the sidelink control signaling containing the first indication information for controlling the reception device to perform related DRX operations, so that the transmission device directly indicates the DRX operation of the reception device, to avoid a problem that the transmission device cannot ensure that the reserved resource(s) is/are within the active duration of the reception device. The balance between the energy saving and the system performance is achieved.

It is understandable that the reserved resource(s) of the transmission device as described above may be time/frequency location(s) of reserved resource(s) of the transmission device used for future sidelink transmission communications. The purpose of the disclosure is to make the reception device to be in an active state before the time/frequency location(s) of reserved resource(s).

It is understandable that in different application scenarios, transmission of the sidelink control signaling can be implemented in different ways. In a possible implementation, the sidelink control signaling is a physical-layer sidelink control information (SCI). That is, the sidelink control signaling is transmitted through the physical-layer SCI. In another possible implementation, the sidelink control signaling is a Media Access Control Control Element (MAC CE). That is, the sidelink control signaling is transmitted through the MAC CE.

In conclusion, with the method for controlling a sidelink communication according to embodiments of the disclosure, the transmission device directly sends the sidelink control signaling to the UE. The sidelink control signaling includes the first indication information for controlling the DRX of the reception device. In this way, the problem that the transmission device cannot ensure that the reserved resource(s) is/are within the active duration of the reception device is solved, and the balance between the energy saving and the system performance is achieved.

In the actual implementation process, in order to facilitate the balance between the energy saving and the system performance, the first indication information for controlling the reception device to perform related DRX operations carried by the sidelink control signaling sent by the transmission device may include any indication content that can support successful connection between the transmission device and the reception device.

The following mainly focuses on three possible indication contents of the first indication information for illustration.

### The first type of indication content

In this embodiment, the first indication information includes information for indicating a time when the reception device enters an active state, so that the transmission device reserves resource(s) for the reception device to enter the active state.

In some possible examples, the sidelink control signaling is a physical-layer sidelink control information (SCI). The physical-layer SCI includes: second indication information regarding time/frequency location(s) of reserved resource(s) for the future sidelink transmission. The second indication information regarding the time/frequency location(s) of reserved resource(s) is further to indicate the time when the reception device enters the active state. Therefore, the reception device enters an active receiving state before the time/frequency location(s) of reserved resource(s), to avoid the energy consumption and improve the system performance.

The second indication information for indicating the time when the reception device enters the active state may include different contents.

### Example 1

In this embodiment, the indication information regarding the time/frequency location(s) of reserved resource(s) also indicates the time when the reception device enters the active state, including entering the active state at a time T before the time/frequency location(s) of reserved resource(s), to ensure that the reception device enters the active receiving state at the time T before the time/frequency location(s) of reserved resource(s) of the transmission device.

The "time T before" refers to the time T before a certain reference time location of the reserved time/frequency resource(s). For example, the reference time location is an initial Orthogonal Frequency Division Multiplexing (OFDM) symbol location of a time/frequency resource, or a slot where a reserved time/frequency resource is located. The unit of T can be a physical time unit or a logical time unit, such as, second, millisecond, frame, subframe, slot, OFDM symbol, slot that has time/frequency resource(s) suitable for the sidelink, etc.

In some possible embodiments, the value range of T may include 0, the value of T may be a fixed value, or the value of T may be determined by the capability of the device. Information of T can be determined based on a downlink signaling received from a network side such as a base station or by reading pre-configuration information. The information of the T includes a value of T or a value range of T mentioned above.

It is also possible to (pre)configure a set of values for the T and indicate which value to take through the physical-layer control information. The information of the T is included in a physical-layer control information. The information of the T includes a value or a value range of the T. As mentioned above, in some possible implementations, the physical-layer control information includes an indication on whether the second indication information is used to indicate the time when the reception device enters the active state. It is understandable that the physical-layer control information includes an indication on whether the second indication information is used to indicate the time when the reception device enters the active state. For example, in the physical-layer control information, if the value of an information bit representing the indication on whether the second indication information is used to indicate whether the reception device enters the active state is 1, it means that the second indication information is used to indicate whether the reception device enters the active state. If the value of the information bit is 0, it means that the second indication information is not used to indicate whether the reception device enters the active state.

For example, information for indicating the value of T is carried in a 1st stage SCI or a corresponding 2nd stage SCI. When the reception device enters the active state according to the time/frequency location(s) of reserved resource(s) in the 1st stage SCI, the value of T indicated in the 1st stage SCI or the corresponding 2nd stage SCI is used.

### Example 2

In this embodiment, the first indication information regarding the time/frequency location(s) of reserved resource(s) includes: information for indicating an offset of the time when the reception device enters the active state, to ensure that the reception device enters the active receiving state before the time/frequency location(s) of reserved resource(s) of the transmission device.

In some possible embodiments, the information for indicating the offset of the time when the reception device enters the active state can be obtained by receiving a downlink signaling from a network side such as a base station, or, by reading pre-configuration information. The information for indicating the offset includes a value or a value range of the offset. For example, the configured offsets are {-8,-4,-2, 0, 2, 4, 8}, and the specific value of the offset is indicated by an indication of 3 bits.

In the embodiment, it is possible to indicate by the sidelink control signaling, whether the offset of the time when the reception device enters the active state is carried. The reception device adjusts the time when entering the active state in a next cycle according to a received offset indication. For example, if the indicated offset is -4 slot, then the reception device enters the active state 4 slots earlier in the next cycle. If the indicated offset is 2 slot, then the reception device enters the active state 2 slots later in the next cycle. The unit of the offset indicated here and thereafter can be either a physical time unit or a logical time unit, such as second, millisecond, frame, subframe, slot, OFDM symbol, a slot having time/frequency resource(s) suitable for the sidelink, etc.

For example, the reception device determines the time to start the DRX on timer according to the current frame number and the current slot number. The DRX on timer is started if (DFN * the number of slots contained in 1 frame + current slot number) % (DRX cycle) = (configured offset) % (DRX cycle), where DFN is the frame number of the sidelink, and the DRX cycle and the configured offset are configured by the base station or the values thereof are pre-configured.

In this embodiment, after receiving the SCI or the MAC CE carrying the offset indication, the reception device determines the time when the DRX on timer starts according to the following equation, which is:
(DFN * the number of slots contained in 1 frame + current slot number) % (DRX cycle) = (configured offset + offset indication) % (DRX cycle). The offset indication is the indicated offset carried here.

An indication on whether this transmission carries an offset indication may be included in the physical-layer SCI, or whether the offset indication is carried in this sidelink control signaling is implicitly indicated through different sidelink control signaling formats. For example, by defining different 2nd stage SCI formats, the information field of the offset indication is included in the physical-layer SCI only when a specific 2nd stage SCI is selected.

The offset indication carried in the physical-layer SCI or the MAC CE may be applied only to the next DRX cycle, or may be applied to each DRX cycle in a subsequent time period, or may be applied to all subsequent DRX cycles. If the offset indication is applied to each DRX cycle within the subsequent time period, the length of the time period can be configured by the base station or may be determined through a pre-configuration method.

When the reception device receives, in one DRX cycle, multiple sidelink control signaling each carrying the offset indication, the reception device can use the last received offset indication.

### The second type of indication content

In this example, the first indication information for controlling the reception device to perform the DRX includes: information for indicating a length of time within which the reception device is in the active state.

In some possible examples, the information for indicating the length of time within which the reception device is in the active state includes: information for indicating an offset by which the length of time within which the reception device is in the active state changes; or, information for indicating a value of the length of time within which the reception device is in the active state.

In the embodiment, an indication on whether this transmission carries an offset indication may be included in the sidelink control signaling, or whether this transmission carries the offset indication may be indicated implicitly through different sidelink control signaling formats. The offset indication is to indicate whether the information for indicating the length of time within which the reception device is in the active state is carried.

It is understandable that in different scenarios, the information for indicating the length of time may include different contents.

### Example 1

In this example, the information for indicating the offset by which the length of time within which the reception device is in the active state changes includes a value or a value range of the offset by which the length of time within which the reception device is in the active state changes by receiving a downlink signaling sent by the base station side or by reading pre-configuration information.

In this embodiment, the reception device may extend or shorten the active duration of this DRX cycle based on the received offset. For example, the reception device extends or shortens the expire time of DRX on timer.

In this example, the information of the offset by which the length of time within which the reception device is in the active state changes is obtained by receiving a downlink signaling sent by the network device such as the base station or reading pre-configuration information. The information includes a value or a value range of the offset.

### Example 2

In this example, the information for indicating the value of the length of time within which the reception device is in the active state includes:
obtaining the information for indicating the length of time within which the reception device is in the active state by receiving a downlink signaling sent by the network device side such as the base station or reading the pre-configuration information. The information includes a value or a value range of the length of time.

### Example 3

In this embodiment, the first indication information includes: information of the DRX cycle of the reception device. The information may be applied only to the current DRX cycle, to the next DRX cycle, to DRX cycles within a subsequent time period, or to all subsequent DRX cycles. If the information is applied to the DRX cycles within the subsequent time period, the length of the time period may be configured by the base station or a pre-configuration method.

It is understandable that the first indication information may include different contents in different application scenarios, examples of which are illustrated below.

### Example 1

In this example, the indication information includes information for indicating an offset by which the DRX cycle of the reception device changes. For example, the configured offset is {-8, -4, -2, 0, 2, 4, 8}, and the specific value of the offset is indicated by information of 3 bits. The unit of the offset indicated here can be either a physical time unit or a logical time unit, such as second, millisecond, frame, subframe, slot, OFDM symbol, slot with time/frequency resource(s) suitable for the sidelink, etc.

### Example 2

In this example, the indication information includes information for indicating a value of the DRX cycle of the reception device, for example, indicating the active duration and an exit duration of the DRX cycle of the reception device.

In some possible embodiments, the information of the offset by which the DRX cycle of the reception device changes can be obtained by receiving the downlink signaling sent by the network device side such as the base station side or reading the pre-configuration information. The information of the offset includes a value or a value range of the offset.

In other possible embodiments, the information of the DRX cycle of the reception device can be obtained by receiving a downlink signaling sent by the network device side such as the base station side or reading pre-configuration information. The information includes a value or a value range of the DRX cycle.

In the actual implementation process, whether the indication information for indicating the DRX cycle of the reception device is carried can be included in the sidelink control signaling, or an indication on whether this sidelink control signaling transmission carries the value of the DRX cycle can be implicitly indicated by different sidelink control signaling formats. For example, whether an indication of the DRX cycle of the reception device is carried in this sidelink control signaling transmission is indicated through the 1st stage SCI, the 2nd stage SCI, or a combination of the 1st stage SCI and the 2nd stage SCI, or implicitly indicated through other SCI formats, for example, through 1-bit information field carried in the 1st stage SCI or the 2nd stage SCI. Only when the indication is "yes", the reception device enters the active state based on the reservation information of resource(s) contained in the 1st stage SCI corresponding to the 1st stage SCI or this 2nd stage SCI transmission. The 1st stage SCI corresponding to the 2nd stage SCI mentioned here means that they correspond to the same Physical Sidelink Shared Channel (PSSCH) transmission.

In some possible embodiments, the indication information of the DRX cycle may only be applicable for a subsequent period of time in the future, and the length of the period of time may be configured by the base station or a pre-configuration method.

In conclusion, with the method for controlling a sidelink communication according to embodiments of the disclosure, the information for indicating the reception device to perform the DRX operation can be generated through different ways in different scenarios. Therefore, the flexibility of indicating the sidelink is improved.

Below, the method for controlling a sidelink communication according to embodiments of the disclosure will be described from the perspective of the reception device.

FIG. 2 is a flowchart of another method for controlling a sidelink communication according to an embodiment of the disclosure.

At step 201, a sidelink control signaling is received. The sidelink control signaling includes first indication information for controlling DRX of the reception device.

In this embodiment, the reception device receives the sidelink control signaling sent by the transmission device. The sidelink control signaling carries the first indication information for controlling the DRX of the reception device. The indication information includes a variety of possible formats that will be described in subsequent implementations and will not be repeated here.

At step 202, a DRX operation is performed based on the first indication information.

In this embodiment, the reception device directly performs the DRX operation according to the first indication information, such that the reception device enters the active state on the reserved resource(s), thereby balancing the system performance and the energy consumption.

The resource reservation information of resource(s) reserved by the transmission device in this embodiment may be a non-periodic resource reservation field for indicating the time/frequency resource(s) for the subsequent repetition transmission(s) of the same Transport Block (TB), or a periodic resource reservation field for indicating the value of the resource reservation period. The reception device may enter the active state only according to time domain location(s) of reserved resource(s) indicated by the periodic reservation, or may enter the active state only according to the time domain location(s) of reserved resource(s) indicated by the non-periodic reservation, or according to both.

In conclusion, with the method for controlling a sidelink communication according to embodiments of the disclosure, the reception device receives the sidelink control signaling sent by the transmission device, and the sidelink control signaling carries the first indication information for controlling the reception device to carry out the DRX operation. The reception device may carry out the DRX operation according to the first indication information, to avoid the problem that the transmission device cannot ensure that the reserved resource(s) is/are in the active duration of the reception device, thereby balancing the energy saving and the system performance.

In the actual execution process, the manner in which the UE performs the DRX operation according to the indication information may vary according to different scenarios. Theoretically, any method for performing the adjustment according to the reserved resource(s) of the transmission device can be included. In the following, three possible implementations will be described as examples.

### In a first implementation

In this example, performing the DRX operation according to the first indication information includes: entering an active state based on information of a time when the reception device enters the active state indicated by the first indication information.

In some possible embodiments, if the sidelink control signaling is the physical-layer SCI, in which the physical-layer SCI includes the second indication information regarding the time/frequency location(s) of reserved resource(s), then the time when entering the active state is determined based on the indication information of the time/frequency location(s) of resource(s) reserved for the future sidelink transmission indicated by the second indication information. Therefore, the reception device enters the active state on the reserved time/frequency resource(s), thereby avoiding the increase of the energy consumption.

The indication information of the time when the reception device enters the active state may be different in different scenarios, and examples are as follows.

### Example 1

In this example, the reception device enters the active state at the time T before the reserved time/frequency resource(s) indicated by the indication information of the time/frequency location(s) of reserved resource(s).

T can be obtained by receiving a downlink control signaling sent by a network device side such as a base station side, based on pre-configuration information, or by receiving the indication information of the value of T carried in the physical-layer SCI.

"The time T before" refers to the T before a certain reference time location of the reserved time/frequency resource(s). For example, the reference time location is an initial OFDM symbol location of a time/frequency resource, or a slot where a reserved time/frequency resource is located. The unit of T can be a physical time unit or a logical time unit, such as, second, millisecond, frame, subframe, slot, OFDM symbol, slot with time/frequency resource(s) suitable for sidelink, etc.

In some possible embodiments, the value range of T may include 0, the T may be a fixed value, a value of the T can be determined by the capability of the device, or a value of the T can be determined by a downlink control signaling received from the base station, or by reading pre-configurations information.

It is also possible to (pre)configure a set of values for the T and indicate which value to take through the physical-layer control information. As mentioned above, in some possible embodiments, the indication information of the time/frequency location(s) of reserved resource(s) in the physical-layer control information also indicates the time when the reception device enters the active state.

For example, the information for indicating the value of T is carried in the 1st stage SCI or the corresponding 2nd stage SCI. When the reception device enters the active state according to the time/frequency location(s) of reserved resource(s) in the 1st stage SCI, the value of T indicated in the 1st stage SCI or the corresponding 2nd stage SCI is used.

### Example 2

In this example, entering the active state based on the information of the time when the reception device enters the active state indicated by the first indication information includes: adjusting the time when the reception device enters the active state in subsequent DRX cycle(s), based on an offset of the time when the reception device enters the active state indicated by the first indication information. For example, the configured offsets are {-8, -4, -2, 0, 2, 4, 8}, and the specific value of the offset is indicated by an indication of 3 bits.

In some possible examples, adjusting the time when the reception device enters the active state in the subsequent DRX cycle(s) based on the first indication information for indicating the offset of the time when the reception device enters the active state includes at least one of the followings.
(1) The time when the reception device enters the active state in the next DRX cycle is adjusted based on the first indication information for indicating the offset of the time when the reception device enters the active state. For example, the time when the reception device enters the active state in the next DRX cycle can be advanced or delayed according to the offset.

For example, if the indicated offset is -4 slot, then the reception device enters the active state 4 slots earlier in the next cycle. If the indicated offset is 2 slot, then the reception device enters the active state 2 slots later. The unit of the offset indicated here and thereafter can be either a physical time unit or a logical time unit, such as second, millisecond, frame, subframe, slot, OFDM symbol, slot with time/frequency resource(s) suitable for the sidelink, etc.

For example, the reception device determines the time when the DRX on timer is started in the next DRX cycle according to the current frame number and the current slot number. When (DFN * the number of slots contained in 1 frame + the current slot number) % (the DRX cycle) = (configured offset) % (the DRX cycle), the DRX on timer is started, where DFN is the frame number of the sidelink, and the DRX cycle and the configured offset are configured by the base station or the value thereof are pre-configured.

(2) The time when the reception device enters the active state in DRX cycles within a subsequent preset time period is adjusted according to the first indication information for indicating the offset of the time when the reception device enters the active state. In this embodiment, all DRX cycles included in the subsequent preset time period are determined, and the time when the reception device enters the active state in all DRX cycles may be advanced or delayed according to the offset. In some possible embodiments, a length of a preset time period for adjusting by the reception device the time when entering the active state in subsequent DRX cycles within the subsequent preset time period by receiving a downlink signaling sent by a network device side such as a base station side, or by reading pre-configuration information.

For example, if the indicated offset is -4 slot, the reception device enters the active state 4 slots earlier in all DRX cycles within the preset time period. If the indicated offset is 2 slot, the reception device enters the active state 2 slots later in all DRX cycles within the preset time period. The unit of the offset indicated here and thereafter can be either a physical time unit or a logical time unit, such as second, millisecond, frame, subframe, slot, OFDM symbol, slot with time/frequency resource(s) suitable for the sidelink, etc.

For example, the reception device determines the time when the DRX on timer is started in all subsequent DRX cycles within the preset time period according to the current frame number and the current slot number. The DRX on timer is started when (DFN * the number of slots contained in 1 Frame + the current slot number) % (the DRX cycle) = (configured offset) % (the DRX cycle), where DFN is the frame number of the sidelink, and the DRX cycle and the configured offset are configured by the base station or the values thereof are pre-configured.

(3) The time when the reception device enters the active state in all subsequent DRX cycles is adjusted according to the first indication information for indicating the offset of the time when the reception device enters the active state. In this embodiment, the time when the reception device enters the active state in all the subsequent DRX cycles may be advanced or delayed according to the offset.

For example, if the indicated offset is -4 slots, the reception device enters the active state 4 slots earlier in all the subsequent DRX cycles. If the indicated offset is 2 slots, the reception device enters the active state 2 slots later in all the subsequent DRX cycles. The unit of the offset indicated here and thereafter can be either a physical time unit or a logical time unit, such as second, millisecond, frame, subframe, slot, OFDM symbol, slot with time/frequency resource(s) suitable for the sidelink, etc.

For example, the reception device determines the time when the DRX on timer is started in all the subsequent DRX cycles according to the current frame number and the current slot number. The DRX on timer is started if (DFN * the number of slots contained in 1 Frame + the current slot number) % (the DRX cycle) = (configured offset) % (the DRX cycle), where DFN is the frame number of the sidelink, and the DRX cycle and the configured offset are configured by the base station or the values thereof are pre-configured.

In the actual execution process, if multiple pieces of indication information for indicating the offset of the time when the reception device enters the active state are received within one DRX cycle, the last received piece of indication information for indicating the offset is used to adjust the time when the reception device enters the active state in the subsequent DRX cycles.

### In the second type

In the embodiment, performing the DRX operation based on the first indication information includes: controlling an active duration in the DRX cycle based on information of a length of time within which the reception device is in the active state indicated by the first indication information.

In some possible embodiments, the active duration in the DRX cycle is extended or shortened according to the offset by which the length of the time within which the reception device is in the active state changes.

In other possible embodiments, the active duration in the DRX cycle is determined according to the information for indicating the value of the length of time during which the reception device is in the active state.

Determining the active duration in the DRX cycle according to the information of the value of the length of time during which the reception device is in the active state may include the following.
(1) The active duration in the DRX cycle is determined based on the information for indicating the value of the length of time within which the reception device is in the active state.

In this embodiment, it is possible to directly take the length of time within which the reception device is in the active state as the active duration in the DRX cycle.

(2) The active duration in the next DRX cycle is controlled according to the first indication information for indicating the length of time within which the reception device is in the active state.

In this embodiment, it is possible to directly take the length of time within which the reception device is in the active state as the active duration in the next DRX cycle.

(3) The active duration in the DRX cycles in the subsequent preset time period is controlled according to the first indication information for indicating the length of time within which the reception device is in the active state.

In this embodiment, after determining the DRX cycles in the subsequent preset time period, it is possible to directly take the length of time within which the reception device is in the active state as the active duration in the DRX cycles in the subsequent preset time period.

In an embodiment of the disclosure, a length of a preset time period for controlling by the reception device the active duration of all DRX cycles within the subsequent time period by receiving a downlink signaling sent by a network device side such as a base station side, or by reading pre-configuration information.

(4) The active duration in all the subsequent DRX cycles is controlled according to the first indication information for indicating the length of time within which the reception device is in the active state.

In this embodiment, after all the subsequent DRX cycles are determined, the length of time within which the reception device is in the active state is directly used as the active duration in all the subsequent DRX cycles.

### In the third type

In this embodiment, performing the DRX operation based on the first indication information includes: determining a DRX cycle based on indication information of the DRX cycle of the reception device indicated by the first indication information.

It is understandable that, in different application scenarios, the indication information may contain different contents, and examples are as follows.

### Example 1

In this example, the indication information includes information for indicating an offset by which the DRX cycle of the reception device changes. The DRX cycle is extended or shortened according to the information for indicating the offset by which the DRX cycle of the reception device changes.

For example, the configured offsets are {-8, -4, -2, 0, 2, 4, 8}, and the specific value of the offset is indicated by an indication of 3 bits. The unit of the offset indicated here can be either a physical time unit or a logical time unit, such as second, millisecond, frame, subframe, slot, OFDM symbol, slot with time/frequency resource(s) suitable for the sidelink, etc.

### Example 2

In this example, the indication information includes information for indicating a value of the DRX cycle of the reception device, so that the DRX cycle is determined according to the information for indicating the value of the DRX cycle of the reception device. For example, the information for indicating the value includes an active duration and an exit duration of the DRX cycle of the reception device.

In this embodiment, determining the DRX cycle based on the indication information of the DRX cycle of the reception device carried in the sidelink control signaling includes any of the followings.
(1) The current DRX cycle is determined based on the first indication information for indicating the DRX cycle of the reception device.

In this embodiment, determining the current DRX cycle by the sidelink directly according to the indication information for indicating the DRX cycle of the reception device includes adjusting the current DRX cycle only according to the indication information.

(2) The next DRX cycle is determined based on the first indication information for indicating the DRX cycle of the reception device.

In this embodiment, determining the next DRX cycle directly according to the indication information for indicating the DRX cycle of the reception device includes adjusting the next DRX cycle only according to the indication information.

(3) The DRX cycles in the subsequent preset time period are determined according to the first indication information for indicating the DRX cycle of the reception device.

In this embodiment, the reception device can determine the length of the preset time period for determining by the reception device the DRX cycles in the subsequent preset time period by receiving a downlink signaling sent by the network device side such as the base station side or by reading pre-configuration information.

In this embodiment, all the DRX cycles in the subsequent preset time period are determined. All DRX cycles in the subsequent preset time period are determined according to the indication information for indicating the DRX cycle of the reception device. All DRX cycles in the subsequent preset time period are adjusted according to the indication information.

(4) All subsequent DRX cycles are determined according to the first indication information for indicating the DRX cycle of the reception device.

In this embodiment, all subsequent DRX cycles are determined. All the subsequent DRX cycles are determined according to the indication information for indicating the DRX cycle of the reception device. All subsequent DRX cycles within the subsequent preset time period are adjusted according to the indication information.

In conclusion, with the method for controlling a sidelink communication according to embodiments of the disclosure, the DRX operation can be performed based on the indication information of the DRX operation sent by the transmission device through different ways flexibly depending on different scenarios. In this way, the flexibility of the DRX operation is improved during the sidelink communication.

Corresponding to the methods according to above embodiments, the disclosure also provides an apparatus for controlling a sidelink communication. Since the apparatus according to embodiments of the disclosure corresponds to the methods according to the above embodiments, the implementations of the methods for controlling a sidelink communication are applicable to the apparatus for controlling a sidelink communication according to embodiments, which will not be described in detail in this embodiment.

FIG. 3 is a schematic diagram illustrating an apparatus for controlling a sidelink communication according to an embodiment of the disclosure. The apparatus is applied to a transmission device. As illustrated in FIG. 3, the apparatus includes: a sending module 301.

The sending module 301 is configured to send a sidelink control signaling. The sidelink control signaling includes first indication information for controlling the DRX of a reception device.

In conclusion, with the apparatus for controlling a sidelink communication according to embodiments of the disclosure, the transmission device directly sends the sidelink control signaling to the UE, in which the sidelink control signaling carries the first indication information for controlling the reception device to perform the DRX operation, to avoid the problem that the transmission device cannot ensure that the reserved resource(s) is/are in the active duration of the reception device. Therefore, the balance between the energy saving and the system performance is achieved.

Corresponding to the methods according to above embodiments, the disclosure also provides an apparatus for controlling a sidelink communication. Since the apparatus for controlling a sidelink communication according to embodiments of the disclosure corresponds to the method according to the above embodiments, the implementations of the methods for controlling a sidelink communication are applicable to the apparatus for controlling a sidelink communication according to embodiments, which will not be described in detail in this embodiment.

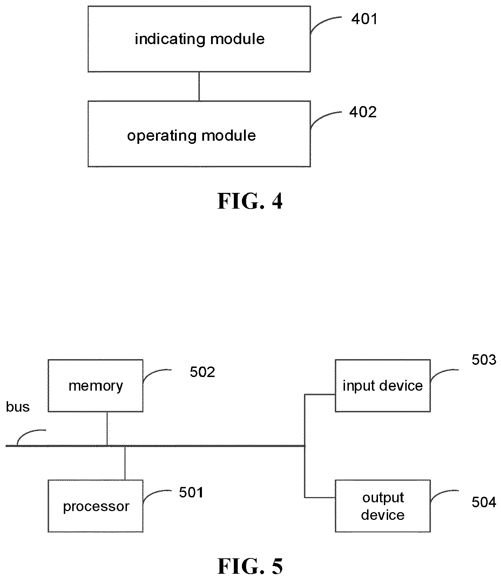

FIG. 4 is a schematic diagram illustrating another apparatus for controlling a sidelink communication according to an embodiment of the disclosure. The apparatus is applied to a transmission device. As illustrated in FIG. 4, the apparatus for controlling a sidelink communication includes: an indicating module 401 and an operating module 402.

The indicating module 401 is configured to receive a sidelink control signaling, in which the sidelink control signaling includes first indication information for controlling the DRX of a reception device.

The operating module 402 is configured to perform a DRX operation based on the first indication information.

In conclusion, with the apparatus for controlling a sidelink communication according to embodiments of the disclosure, the reception device receives the sidelink control signaling sent by the transmission device, in which the sidelink control signaling carries the first indication information for controlling the reception device to perform the DRX operation, and the reception device performs the DRX operation according to the first indication information, to avoid the problem that the transmission device cannot ensure that the reserved resource(s) is/are in the active duration of the reception device. Therefore, the balance between the energy saving and the system performance is achieved.

According to the embodiments of the disclosure, the disclosure also provides a communication device and a readable storage medium.

FIG. 5 is a block diagram illustrating a communication device according to an embodiment of the disclosure. The communication devices are intended to represent various forms of digital computers, such as laptop computers, desktop computers, workbenches, personal digital assistants, servers, blade servers, mainframe computers, and other suitable computers. The communication devices may also represent various forms of mobile devices, such as personal digital processors, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the communication device includes: one or more processors 501, a memory 502, and interfaces for connecting components, including a high-speed interface and a low-speed interface. The components are interconnected using different buses and may be mounted on a common main board or otherwise mounted as desired. The processor may process instructions executed within the communication device, including instructions stored in or on the memory to display graphical information from the GUI on an external input/output device. In other implementations, multiple processors and/or buses may be used with multiple memories, if desired. Similarly, a plurality of communication devices can be connected each providing a part of necessary operations (e.g., as a server array, a group of blade servers, or a multiprocessor system). An example of a processor 501 is shown in FIG. 5.

The memory 502 is the non-transitory computer readable storage medium provided in the disclosure. The memory stores instructions executable by at least one processor, to cause the at least one processor to execute the method provided by the disclosure. The non-transitory computer readable storage medium of the disclosure stores computer instructions that are used to cause a computer to implement the method provided by the disclosure.

As a non-transitory computer readable storage medium, the memory 502 can be used to store non-transitory software programs, non-transitory computer executable programs and modules, such as the program instructions/modules corresponding to the method in the embodiment of the disclosure. The processor 501 executes various functional applications of the server and data processing by running the non-transitory software programs, instructions, and modules stored in the memory 502, i.e., implement the method in the method embodiments described above.

The memory 502 may include a storage program area and a storage data area. The storage program area may store an operating system, and applications required for at least one function. The storage data area may store data created based on the use of the positioning communication device, and the like. In addition, the memory 502 may include a high-speed random access memory, and a non-transitory memory, such as at least one disk memory device, flash memory device, or other non-transitory solid state memory device. Optionally, the memory 502 may include memories that are remotely set relative to the processor 501, and these remote memories may be connected to the positioning communication device via a network. Examples of the network include, but are not limited to, the Internet, corporate intranets, local area networks, mobile communication networks, and combinations thereof.

The communication device for performing the method for controlling a sidelink communication may also include: an input device 503 and an output device 504. The processor 501, the memory 502, the input device 503, and the output device 504 may be connected via buses or otherwise. For example, the connections in FIG. 5 are implemented by buses.

The input device 503 may receive input numbers or character information, and key signal input related to user settings for the positioning communication device and functional control, such as a touch screen, a keypad, a mouse, a trackpad, a touchpad, indicator rod, one or more mouse buttons, trackballs, joysticks, and other input devices. The output device 504 may include a display device, an auxiliary illuminating device (e.g., LED), and a haptic feedback device (e.g., vibration motor), etc. The display device may include, but is not limited to, a Liquid Crystal Display (LCD), a Light Emitting Diode (LED) display, and a plasma display. In some embodiments, the display device may be a touch screen.

Various implementations of the systems and techniques described herein may be implemented in a digital electronic circuit system, an integrated circuit system, an Application Specific Integrated Circuit (ASIC), computer hardware, firmware, software, and/or combinations thereof. These various implementations may include: implementations in one or more computer programs, in which the one or more computer programs may be executed and/or interpreted on a programmable system including at least one programmable processor, which may be a dedicated or general-purpose programmable processor that may receive data and instructions from a storage system, at least one input device, and at least one output device, and send the data and instructions to the storage system, the at least one input device, and the at least one output device.

These computing programs (also referred to as programs, software, software applications, or codes) include machine instructions for a programmable processor and may be implemented using high-level procedural and/or object-oriented programming languages, and/or assembly/machine languages. As used herein, the terms "machine-readable medium" and "computer-readable medium" refer to any computer program product, device, and/or apparatus (e.g., disk, Compact Disc Read-Only Memories (CD-ROM), memory, Programmable Logic Device (PLD)) used to provide machine instructions and/or data to a programmable processor, including machine-readable medium that receives machine instructions as machine-readable signals. The term "machine-readable signal" refers to any signal used to provide machine instructions and/or data to the programmable processor.

In order to provide interaction with a user, the systems and techniques described herein may be implemented on a computer having a display device (e.g., a Cathode Ray Tube (CRT) or a Liquid Crystal Display (LCD) monitor) for displaying information to a user; and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: a Local Area Network (LAN), a Wide Area Network (WAN), and the Internet.

The computer system may include a client and a server. The client and server are generally remote from each other and interacting through a communication network. The client-server relation is generated by computer programs running on the respective computers and having a client-server relation with each other.

The transmission device directly sends the sidelink control signaling to the UE, in which the sidelink control signaling carries the indication information for controlling the reception device to perform the DRX operation. In this way, the problem that the transmission device cannot ensure that the reserved resource(s) is/are within the active duration of the reception device, and the energy saving and the system performance are balanced.

It is understandable that the steps can be reordered, added or deleted using various forms of the processes shown above. For example, the steps in the disclosure may be performed in parallel or sequentially or in different orders, as long as the desired results of the technical solutions disclosed in the disclosure are achieved, which are not limited herein.

The specific embodiments described above do not constitute a limitation on the scope of protection of the disclosure. It should be understood by those skilled in the art that various modifications, combinations, sub-combinations and substitutions can be made depending on the design requirements and other factors. Any modifications, equivalent substitutions and improvements made within the spirit and principles of the disclosure shall be included in the scope of protection of the disclosure.

## Claims

1. A method for controlling a sidelink communication, performed by a transmission device, comprising:
sending a sidelink control signaling, wherein the sidelink control signaling comprises first indication information for controlling Discontinuous Reception (DRX) of a reception device.

2. The method of claim 1, wherein,
the sidelink control signaling is physical-layer sidelink control information (SCI); or
the sidelink control signaling is a Media Access Control Control Element (MAC CE).

3. The method of claim 1, wherein the first indication information comprises information for indicating a time when the reception device enters an active state.

4. The method of claim 3, wherein the sidelink control signaling is a physical-layer sidelink control information (SCI), and the physical-layer SCI comprises:
second indication information regarding time/frequency location(s) of reserved resource(s), wherein the second indication information is to indicate the time when the reception device enters the active state.

5. The method of claim 4, wherein the second indication information is to indicate to enter the active state at a time T before the time/frequency location(s) of reserved resource(s).

6. The method of claim 5, further comprising: determining information of the T by:
receiving a downlink signaling sent by a network device side; or
reading pre-configuration information.

7. The method of claim 5, wherein the physical-layer SCI comprises information for indicating the T.

8. The method of claim 4, wherein the physical-layer SCI comprises: an indication on whether the second indication information is used to indicate whether the reception device enters the active state.

9. The method of claim 3, wherein the first indication information further comprises information for indicating an offset of the time when the reception device enters the active state.

10. The method of claim 9, further comprising: determining the information for indicating the offset by:
receiving a downlink signaling sent by a network device side; or
reading pre-configuration information.

11. The method of claim 9, wherein the sidelink control signaling further comprises an indication on whether the offset of the time when the reception device enters the active state is carried.

12. The method of any one of claims 1 to 11, wherein the first indication information further comprises: information for indicating a length of time within which the reception device is in the active state.

13. The method of claim 12, wherein the information for indicating the length of time within which the reception device is in the active state comprises:
information for indicating an offset by which the length of time within which the reception device is in the active state changes; or,
information for indicating a value of the length of time within which the reception device is in the active state.

14. The method of claim 13, wherein the information for indicating the offset by which the length of time within which the reception device is in the active state changes is determined by:
receiving a downlink signaling sent by the network device side; or
reading pre-configuration information.

15. The method of claim 13, wherein the information for indicating the value of the length of time within which the reception device is in the active state is determined by:
receiving a downlink signaling sent by the network device side; or
reading pre-configuration information.

16. The method of claim 12, wherein the sidelink control signaling further comprises indication information on whether the information for indicating the length of time within which the reception device is in the active state is carried.

17. The method of claim 1, wherein the first indication information further comprises:
information for indicating a DRX cycle of the reception device.

18. The method of claim 17, wherein the information for indicating the DRX cycle of the reception device comprises:
information for indicating an offset by which the DRX cycle of the reception device changes; or,
information for indicating a value of the DRX cycle of the reception device.

19. The method of claim 18, wherein the information for indicating the offset by which the DRX cycle of the reception device changes is determined by:
receiving a downlink signaling sent by a network device side; or
reading pre-configuration information.

20. The method of claim 18, wherein the information for indicating the value of the DRX cycle of the reception device is determined by:
receiving a downlink signaling sent by a network device side; or
reading pre-configuration information.

21. The method of claim 17, wherein the sidelink control signaling further comprises information on whether the information for indicating the DRX cycle of the reception device is carried.

22. A method for controlling a sidelink communication, performed by a reception device, comprising:
receiving a sidelink control signaling, wherein the sidelink control signaling comprises first indication information for controlling Discontinuous Reception (DRX) of the reception device; and
performing a DRX operation based on the first indication information.

23. The method of claim 22, wherein performing the DRX operation based on the first indication information comprises:
entering an active state based on information of a time when the reception device enters the active state indicated by the first indication information.

24. The method of claim 23, wherein the sidelink control signaling is physical-layer sidelink control information (SCI), the physical-layer SCI comprises second indication information regarding time/frequency location(s) of reserved resource(s),
wherein the time when entering the active state is determined based on the time/frequency location(s) of reserved resource(s) indicated by the second indication information.

25. The method of claim 24, further comprising:
entering the active state at a time T before the time/frequency location(s) of reserved resource(s).

26. The method of claim 25, wherein information of the time T is obtained by at least one of:
receiving a downlink control signaling sent by a network device side;
reading pre-configuration information; or
receiving indication information for indicating a value of the T carried by the physical-layer SCI.

27. The method of claim 23, wherein entering the active state based on the information of the time when the reception device enters the active state indicated by the first indication information comprises:
adjusting the time when the reception device enters the active state in subsequent DRX cycle(s), based on an offset of the time when the reception device enters the active state indicated by the first indication information.

28. The method of claim 27, wherein adjusting the time when the reception device enters the active state in the subsequent DRX cycle(s) comprises:
adjusting, by the reception device, the time when entering the active state in a next DRX cycle based on the first indication information;
adjusting, by the reception device, the time when entering the active state in each DRX cycle within a subsequent preset time period based on the first indication information; or
adjusting, by the reception device, the time when entering the active state in each subsequent DRX cycle based on the first indication information.

29. The method of claim 28, wherein adjusting the time when entering the active state in each DRX cycle within the subsequent preset time period comprises:
determining the preset time period by receiving a downlink signaling sent by a network device side or reading pre-configuration information.

30. The method of claim 27, further comprises:
in response to receiving a plurality of pieces of information for indicating an offset of the time when the reception device enters the active state within a DRX cycle, adjusting the time when entering the active state in each subsequent DRX cycle based on a last received piece of information for indicating the offset.

31. The method of claim 22, wherein performing the DRX operation based on the first indication information comprises:
controlling an active duration in a DRX cycle based on information of a length of time within which the reception device is in the active state indicated by the first indication information.

32. The method of claim 31, wherein controlling the active duration in the DRX cycle based on the information of the length of time within which the reception device is in the active state indicated by the first indication information comprises:
extending or shortening the active duration in the DRX cycle based on information for indicating an offset by which the length of time within which the reception device is in the active state changes; or,
determining the active duration in the DRX cycle based on information for indicating a value of the length of time within which the reception device is in the active state.

33. The method of claim 31, wherein controlling the active duration in the DRX cycle comprises:
controlling, by the reception device, the active duration in a current DRX cycle based on the first indication information;
controlling, by the reception device, an active duration in a next DRX cycle based on the first indication information;
controlling, by the reception device, an active duration in each DRX cycle within a subsequent preset time period based on the first indication information; or
controlling, by the reception device, an active duration in each subsequent DRX cycle.

34. The method of claim 33, wherein controlling the active duration in each DRX cycle within the subsequent preset time period comprises:
determining the preset time period by receiving a downlink signaling sent by a network device side or reading pre-configuration information.

35. The method of claim 22, wherein performing the DRX operation based on the first indication information comprises:
determining a DRX cycle based on information of the DRX cycle of the reception device indicated by the first indication information.

36. The method of claim 35, wherein determining the DRX cycle based on the information of the DRX cycle of the reception device indicated by the first indication information comprises:
extending or shortening the DRX cycle based on information for indicating an offset by which the DRX cycle of the reception device changes; or,
determining the DRX cycle based on information for indicating a value of the DRX cycle of the reception device.

37. The method of claim 35, wherein determining the DRX cycle comprises:
determining, by the reception device, a current DRX cycle based on the first indication information;
determining, by the reception device, a next DRX cycle based on the first indication information;
determining, by the reception device, each DRX cycle within a subsequent preset time period based on the first indication information; or
determining, by the reception device, all subsequent DRX cycles based on the first indication information.

38. The method of claim 37, wherein determining each DRX cycle in the subsequent preset time period comprises:
determining the preset time period by receiving a downlink signaling sent by a network device side; or reading pre-configuration information.

39. An apparatus for controlling a sidelink communication, comprising:
a sending module, configured to send a sidelink control signaling, wherein the sidelink control signaling comprises first indication information for controlling Discontinuous Reception (DRX) of a reception device.

40. An apparatus for controlling a sidelink communication, comprising:
an indicating module, configured to receive a sidelink control signaling, wherein the sidelink control signaling comprises first indication information for controlling Discontinuous Reception (DRX) of a reception device; and
an operating module, configured to perform DRX operation based on the first indication information.

41. A communication device, comprising a processor, a transceiver, a memory, and a computer program stored on the memory, wherein when the computer program is executed by the processor, the method for controlling a sidelink communication of any one of claims 1 to 21 is implemented.

42. A communication device, comprising a processor, a transceiver, a memory, and a computer program stored on the memory, wherein when the computer program is executed by the processor, the method for controlling a sidelink communication of any one of claims 22 to 38 is implemented.

43. A processor-readable storage medium, having a computer program stored thereon, wherein the computer program is configured to cause a processor to perform a method for controlling a sidelink communication of any one of claims 1 to 21 or the method for controlling a sidelink communication of any one of claims 22 to 38.
